# EUROPÄISCHE PATENTSCHRIFT

(11) **EP 0 756 676 B1**
(45) Veröffentlichungstag und Bekanntmachung des Hinweises auf die Patenterteilung: **16.12.1998**
(21) Anmeldenummer: 95916660.4
(22) Anmeldetag: 15.04.1995
(51) Int. Cl.: F16H 57/04

(54) **GETRIEBEGEHÄUSE**
GEAR CASE
CARTER DE BOITE DE VITESSES

(30) Priorität: 22.04.1994 DE 4414164
(43) Veröffentlichungstag der Anmeldung: 05.02.1997
(73) Patentinhaber: ZF FRIEDRICHSHAFEN Aktiengesellschaft, 88038 Friedrichshafen (DE)
(72) Erfinder: GRABHERR, Werner, D-88214 Ravensburg (DE); SELLMAIR, Helmut, D-88149 Nonnenhorn (DE)
(86) Internationale Anmeldenummer: EP9501418
(87) Internationale Veröffentlichungsnummer: WO9529349

(56) Entgegenhaltungen:
- DE-A- 3 906 330
- DE-A- 4 126 161
- FR-A- 2 443 002
- DATABASE WPI Week 5944 28.Mai 1980 Derwent Publications Ltd., London, GB; AN 425300 & SU,A,679 754 (CONS ROAD EQUIP RES) , 18.August 1979

## Beschreibung

Die Erfindung betrifft ein Getriebegehäuse.

Getriebegehäuse enthalten einen Schmiermittelsumpf. Aus diesem Schmiermittelsumpf fördert eine Pumpe das Schmiermittel zu den Schmierstellen im Getriebe. Das Schmiermittelvolumen wird hierbei durch die Förderleistung der Pumpe und die Anzahl der Schmierstellen im Getriebe bestimmt. Das Schmiermittelniveau des Getriebesumpfes ist festgelegt durch zwei Extrema:
ein unteres Niveau, welches bei tiefen Temperaturen ein sicheres Fördern des Schmiermittels durch die Pumpe noch gewährleistet;
ein oberes Niveau, welches durch die Einbaulage der drehenden Teile, zum Beispiel Wellen und Kupplungen, vorbestimmt ist.
Bei Unterschreiten des unteren Niveaus kommt es bekanntermaßen zu Ansauggeräuschen der Pumpe und zu Druckeinbrüchen.

Bei Überschreiten des oberen Niveaus wird das Schmiermittel durch die drehenden Teile aufgeschäumt, es kommt zu Panschverlusten, Schmiermittelaustritt aus dem Entlüfter und Schmiermittelalterung.

Bedingt durch beengte Platzverhältnisse im Motorraum, zum Beispiel bei einem Pkw mit Frontantrieb und quer zur Fahrtrichtung eingebautem Motor, ergibt sich eine Verringerung des Bauvolumens des Getriebegehäuses insgesamt. Daneben bewirkt eine geringere Bodenfreiheit des Fahrzeugs, daß das Getriebegehäuse im unteren Teil, also im Bereich des Schmiermittelsumpfes, zusätzliches Volumen verliert. Eine Verringerung des Bauvolumens bedeutet neben einer Verringerung des Schmiermittelvolumens aber auch, daß das obere Schmiermittelniveau näher an die drehenden Teile heranreicht.

Aus der DE-A-39 06 330 ist ein Getriebegehäuse mit mehreren Gehäuseräumen bekannt. Das Differential des dargestellten Getriebes ist hierbei in einem separaten Gehäuseraum untergebracht. Dieser Gehäuseraum wird über eine Wand und eine zusätzliche Ölreservoirplatte gebildet. Die Höhe der Wand legt ein oberes Schmiermittelniveau fest. Der abgeschottete Differentialraum dient zur Beruhigung des Schmiermittelsumpfs.

Die Erfindung hat die Aufgabe, den vorgenannten Stand der Technik weiterzuentwickeln.

Die Aufgabe wird erfindungsgemäß gelöst, indem ein dritter Gehäuseraum zusätzlich genutzt wird. Der dritte Gehäuseraum wird aus mehreren durch Rippen getrennten einzelnen Kammern gebildet, wobei die einzelnen Kammern über einen Durchlaß miteinander in Verbindung stehen.

Die erfindungsgemäße Lösung bietet den Vorteil, daß das Schmiermittelvolumen vergrößert wird, indem ein im Getriebegehäuse bereits vorhandener Bauraum als zusätzlicher Gehäuseraum für den Schmiermittelsumpf verwendet wird.

In einer Ausgestaltung der Erfindung wird vorgeschlagen, daß das vom Schöpfrad aufgenommene Schmiermittelvolumen in Behälter transportiert wird und diese eine Ablauföffnung aufweisen. Hierdurch wird der Vorteil erzielt, daß das vom Schöpfrad aufgenommene Schmiermittelvolumen nicht unmittelbar in den Schmiermittelsumpf wieder zurückfließt. Über den Durchmesser der Ablauföffnung läßt sich die zeitliche Verzögerung einstellen, mit der das Schmiermittel in den Schmiermittelsumpf zurückfließt und somit das Befüllverhalten des Behälters steuern.

In einer weiteren Ausgestaltung wird vorgeschlagen, daß der Behälter innerhalb des Getriebegehäuses sich befindet. Hierdurch wird sichergestellt, daß bei einer etwaigen Undichtigkeit des Behälters kein Schmiermittel in die Umwelt gelangt.

In einer weiteren Ausgestaltung wird vorgeschlagen, daß die Wand zwischen dem ersten und zweiten Gehäuseraum einen Durchlaß aufweist, so daß sich bei Fahrzeugstillstand unterschiedliche Schmiermittelniveaus ausgleichen können.

In der Zeichnung ist ein Ausführungsbeispiel dargestellt. Es zeigen:
- Fig. 1: einen Querschnitt eines Getriebegehäuses und
- Fig. 2: ein Schnittbild des Getriebegehäuses.

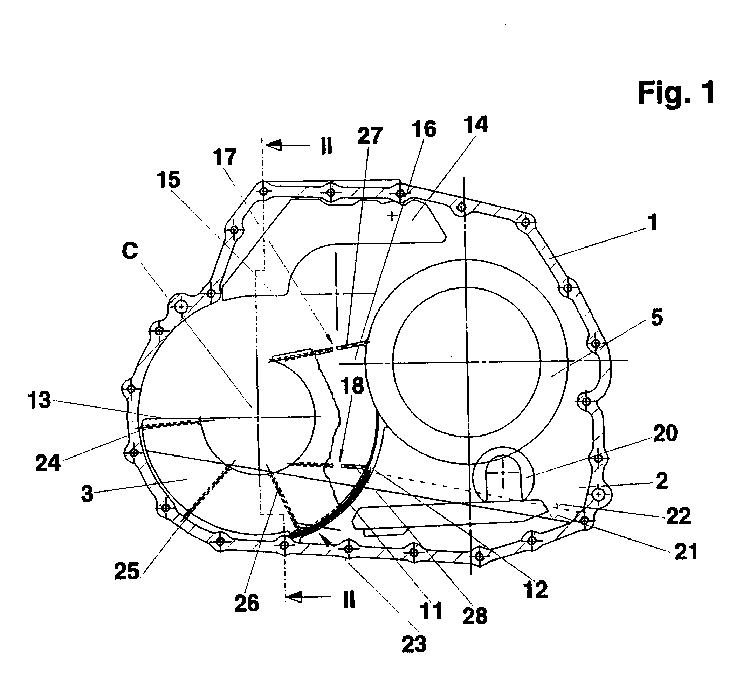

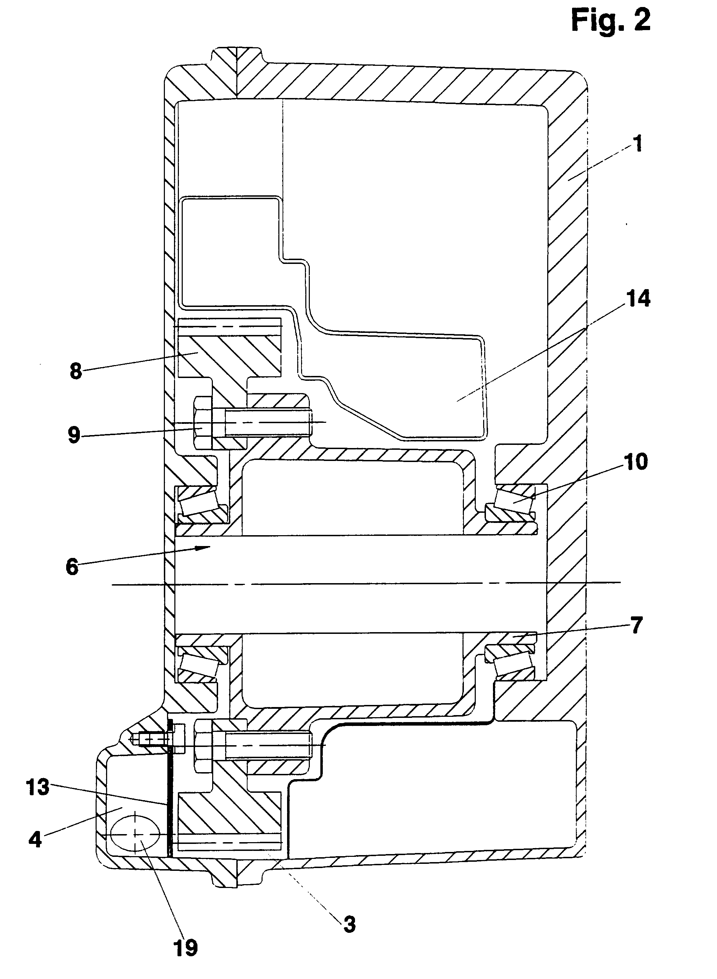

In Fig. 1 ist ein Getriebegehäuse 1 dargestellt. Innerhalb des Getriebegehäuses 1 befindet sich ein erster Gehäuseraum 2, ein zweiter Gehäuseraum 3, ein Behälter 14, ein Behälter 16, drehende Teile 5, zum Beispiel Wellen und Kupplungen und ein dritter Gehäuseraum 4, der in der Zeichnung hinter dem zweiten Gehäuseraum 3 sich befindet. Im ersten Gehäuseraum 2 befindet sich, schematisch dargestellt, das Ansaugfilter einer Pumpe 20. Im zweiten Gehäuseraum 3 befindet sich ein nicht dargestelltes Schöpfrad 6. Dargestellt ist der Mittelpunkt C des Schöpfrades 6. Das Schöpfrad 6 ist in Fig. 2 ersichtlich. Hinter dem Schöpfrad 6 befindet sich eine Wand 13. Diese Wand 13 trennt den zweiten Gehäuseraum 3 und den dritten Gehäuseraum 4. Der dritte Gehäuseraum 4 ist somit in Fig. 1 durch die Wand 13 verdeckt. Zwischen dem ersten Gehäuseraum 2 und dem zweiten Gehäuseraum 3 befindet sich eine Wand 11. Über die Höhe der Wand 11, Überlaufkante 12, läßt sich das obere Schmiermittelniveau 22 des ersten Gehäuseraumes 2 festlegen. Das obere Schmiermittelniveau 22 ist gestrichelt dargestellt, wobei durch eine Neigung gegenüber der Horizontalen eine geneigte Einbaulage des Getriebes angedeutet ist. Die Wand 11 zeigt einen Durchlaß 23, so daß sich unterschiedliche Schmiermittelniveaus im ersten und zweiten Gehäuseraum 2 bzw. 3 bei Fahrzeugstillstand ausgleichen können. Der dritte Gehäuseraum 4 ist mit dem ersten Gehäuseraum 2 durch eine Öffnung 19 verbunden. Diese Öffnung 19 ist in Fig. 2 ersichtlich.
Vom Mittelpunkt C des nicht dargestellten Schöpfrades 6 führen sternförmig Rippen zum Getriebegehäuse 1. Dargestellt sind fünf Rippen 24 bis 28. Die Rippen dienen der Verstärkung des Getriebegehäuses 1. Diese Rippen bilden Kammern. Der dritte Gehäuseraum 4 entsteht, indem mehrere Kammern miteinander durch Bohrungen verbunden werden oder indem zum Beispiel die Höhe der Rippen 25 und 26 verringert wird.

Oberhalb des nicht dargestellten Schöpfrades 6 befindet sich ein Behälter 14. Das vom Schöpfrad 6 aufgenommene Schmiermittelvolumen wird über nicht dargestellte Leitbleche in den Behälter 14 geleitet. Der Behälter 14 besitzt am Behälterboden eine Öffnung 15. Über die Öffnung 15 fließt das Schmiermittel zurück in den Schmiermittelsumpf. Über den Durchmesser der Öffnung 15 läßt sich die abfließende Schmiermittelmenge steuern.
Im Drehbereich des nicht dargestellten Schöpfrades 6 befindet sich ein weiterer Behälter 16. Der Behälter 16 kann als zusätzliches Bauteil in das Getriebegehäuse 1 eingebracht werden oder indem der Raum zwischen den beiden Rippen 27 und 28 verwendet wird. Der Behälter 16 besitzt am oberen Ende eine Öffnung 17 für den Zulauf und am unteren Teil eine Öffnung 18, über die das Schmiermittel ablaufen kann.

Die Funktion der Anordnung ist folgende:
In kaltem Betriebszustand und bei Fahrzeugstillstand stellt sich in allen drei Gehäuseräumen das gleiche Schmiermittelniveau ein. Nach dem Anlaßvorgang und bei sich drehendem Schöpfrad 6 transportiert dieses das sich im zweiten Gehäuseraum 3 befindende Schmiermittelvolumen in den Behälter 14 bzw. Behälter 16. Danach kann das Schöpfrad 6 frei drehen. Aufgrund des Durchmessers des Durchlasses 23 strömt vom ersten Gehäuseraum 2 zum zweiten Gehäuseraum 3 nur ein geringes Schmiermittelvolumen. Durch das zusätzliche Schmiermittelvolumen des dritten Gehäuseraumes 4 wird sichergestellt, daß das Ansaugfilter der Pumpe 20 immer von Schmiermittel bedeckt ist, unteres Schmiermittelniveau 21. Steigt während des Fahrbetriebs die Temperatur des Schmiermittels, so verbessert sich die Fließfähigkeit des Schmiermittels. Durch erhöhten Rückfluß des Schmiermittels aus den Schmierstellen zurück in den Getriebesumpf und Temperaturausdehnung des Schmiermittels steigt dessen Niveau im Getriebe. Erreicht das Schmiermittelvolumen ein oberes Niveau 22, so läuft das zusätzliche Schmiermittelvolumen über die Überlaufkante 12 in den zweiten Gehäuseraum 3. Das in den zweiten Gehäuseraum 3 strömende Schmiermittelvolumen wird durch das Schöpfrad 6 in den Behälter 14 bzw. Behälter 16 transportiert. Somit ist sichergestellt, daß das obere Schmiermittelniveau 22 immer unterhalb der drehenden Teile 5 verbleibt.

In Fig. 2 dargestellt ist das Schnittbild des Getriebes entlang der Schnittlinie II-II. Dargestellt ist das Getriebegehäuse 1, in dem sich das Schöpfrad 6 befindet. Das Schöpfrad 6 stützt sich über Wälzlager 10 am Getriebegehäuse 1 ab. Das Schöpfrad 6 besteht aus einem Differentialkorb 7 und einem Stirnrad 8. Das Stirnrad 8 ist mittels Schrauben 9 am Differentialkorb 7 befestigt. Das Schöpfrad 6 sitzt in dem zweiten Gehäuseraum 3. Eine Wand 13 trennt den zweiten Gehäuseraum 3 und den dritten Gehäuseraum 4. Die Wand 13 kann zum Beispiel als Blechteil ausgeführt sein, welches an den Rippen 24 bis 28 anliegt und mittels Schrauben befestigt werden kann.

Der dritte Gehäuseraum 4 ist mit dem ersten Gehäuseraum 2 durch eine Öffnung 19 verbunden. Oberhalb des Schöpfrades 6 ist der Behälter 14 dargestellt.

### Bezugszeichen

- 1: Getriebegehäuse
- 2: erster Gehäuseraum
- 3: zweiter Gehäuseraum
- 4: dritter Gehäuseraum
- 5: drehende Teile
- 6: Schöpfrad
- 7: Differentialkorb
- 8: Stirnrad
- 9: Schraube
- 10: Wälzlager
- 11: Wand
- 12: Überlaufkante
- 13: Wand
- 14: Behälter
- 15: Öffnung
- 16: Behälter
- 17: Öffnung
- 18: Öffnung
- 19: Öffnung
- 20: Pumpe
- 21: unteres Schmiermittelniveau
- 22: oberes Schmiermittelniveau
- 23: Durchlaß
- 24: Rippe
- 25: Rippe
- 26: Rippe
- 27: Rippe
- 28: Rippe

- C: Mittelpunkt

## Patentansprüche

1. Getriebegehäuse (1) mit drei Gehäuseräumen (2 bis 4), wobei der erste Gehäuseraum (2) mit dem zweiten Gehäuseraum (3) durch eine Wand (11) getrennt ist, die Höhe der Wand (11) ein oberes Schmiermittelniveau (22) festlegt, so daß eine Volumenvergrößerung des Schmiermittels aufgrund einer erhöhten Temperatur in den zweiten Gehäuseraum (3) läuft und von einem Schöpfrad (6), das sich im zweiten Gehäuseraum (3) befindet, aufgenommen wird, der dritte Gehäu seraum (4) durch eine Wand (13) vom zweiten Gehäuseraum (3 getrennt ist und der dritte Gehäuseraum (4) über eine Öffnung (19) mit dem ersten Gehäuseraum (2) verbunden ist, dadurch **gekennzeichnet,** daß der dritte Gehäuseraum aus mehreren durch Rippen (24 bis 28) getrennten einzelnen Kammern sich bildet, wobei die einzelnen Kammern über einen Durchlaß (17,18) miteinander in Verbindung stehen und ein unteres Schmiermittelniveau (21) durch die Schmiermittelvolumina im ersten und dritten Gehäuseraum (2, 4) festgelegt wird.

2. Anordnung nach Anspruch 1, dadurch **gekennzeichnet,** daß das vom Schöpfrad (6) aufgenommene Schmiermittelvolumen in Behälter (14, 16) gefördert wird und diese eine Ablauföffnung (15, 18) aufweisen.

3. Anordnung nach Anspruch 2, dadurch **gekennzeichnet,** daß die Behälter (14, 16) sich innerhalb des Getriebegehäuses (1) befinden.

4. Anordnung nach Anspruch 1, dadurch **gekennzeichnet,** daß die Wand (11) zwischen dem ersten und zweiten Gehäuseraum (2, 3) einen Durchlaß (23) aufweist, so daß sich bei Fahrzeugstillstand unterschiedliche Schmiermittelniveaus ausgleichen können.

## Claims

1. Gear case (1) with three case chambers (2 to 4), the first case chamber (2) being separated from the second case chamber (3) by a wall (11), the height of the wall (11) determining an upper lubricant level (22), so that an increase in the volume of the lubricant as a result of an increase in temperature runs into the second case chamber (3) and is received by a bucket wheel (6) which is disposed in the second case chamber (3), the third case chamber (4) being separated by a wall (13) from the second case chamber (3) and the third case chamber (4) being connected via an opening (19) to the first case chamber (2), characterised in that the third case chamber is formed by a plurality of individual compartments separated by ribs (24 to 28), the individual compartments being connected to one another via a passage (17, 18) and a lower lubricant level (21) being determined by the lubricant volume in the first and third case chambers (2, 4).

2. Arrangement according to claim 1, characterised in that the lubricant volume received by the bucket wheel (6) is conveyed into receptacles (14, 16) which comprise an outflow opening (15, 18).

3. Arrangement according to claim 2, characterised in that the receptacles (14, 16) are disposed within the gear case (1).

4. Arrangement according to claim 1, characterised in that the wall (11) between the first and second case chambers (2, 3) comprises a passage (23), so that different lubricant levels can be balanced when the vehicle is stationary.

## Revendications

1. Carter d'engrenages (1) comportant trois chambres (2 à 4), la première chambre (2) étant séparée par une cloison (11) de la deuxième chambre (3), la hauteur de la cloison (11) déterminant un niveau supérieur de lubrifiant (22) de façon qu'une augmentation du volume de lubrifiant en raison d'une augmentation de la température s'écoule dans la deuxième chambre (3) et est recueilli par une roue à augets (6) qui se trouve dans la deuxième chambre (3), la troisième chambre (4) étant séparée par une cloison (13) de la deuxième chambre (3) et la troisième chambre (4) étant reliée par un orifice (19) à la première chambre (2), **caractérisé** en ce que la troisième chambre se compose de plusieurs chambres individuelles séparées par des nervures (24 à 28), les différentes chambres communiquant entre elles par un passage (17, 18) et un niveau inférieur de lubrifiant (21) étant déterminé par les volumes de lubrifiant dans la première et la troisième chambre (2, 4).

2. Disposition selon la revendication 1, **caractérisée** en ce que le volume de lubrifiant recueilli par la roue à augets (6) est transporté dans des récipients (14, 16), et en ce que ceux-ci comportent un orifice d'écoulement (15, 18).

3. Disposition selon la revendication 2, **caractérisée** en ce que les récipients (14, 16) se trouvent à l'intérieur du carter d'engrenage (1).

4. Disposition selon la revendication 1, **caractérisée** en ce que la cloison (11) entre la première et la deuxième chambre (2, 3) comporte un passage (23) permettant que les différents niveaux de lubrifiant s'équilibrent lors de l'arrêt du véhicule.
